# EUROPEAN PATENT SPECIFICATION

(11) **EP 2 894 882 B1**
(45) Date of publication and mention of the grant of the patent: **20.11.2019**
(21) Application number: 14194134.4
(22) Date of filing: 20.11.2014
(51) Int. Cl.: H04W 4/02

(54) **Emergency mobile originated location report**
Vom Mobilgerät ausgehender Notfall-Standortbericht
Rapport de localisation d'urgence provenant d'une unité mobile

(30) Priority: 26.12.2013 US 201314140732
(43) Date of publication of application: 15.07.2015
(73) Proprietor: Intel Corporation, Santa Clara, CA 95054 (US)
(72) Inventor: Levin, Tirosh, 38248 Hadera (IL); Rochberger, Haim, 40600 Tel Mond (IL); Aswani, Chandru, 560066 Bangalore (IN)
(74) Representative: Goddar, Heinz J.

(56) References cited:
- EP-A1- 2 469 894
- WO-A2-2007/016695
- US-A1- 2005 153 706
- US-A1- 2011 250 906
- US-B2- 7 317 910

## Description

### TECHNICAL FIELD

Embodiments described herein generally relate to emergency services and in particular, to emergency mobile originated location reports.

### BACKGROUND

Enhanced 911 (E-911) is a system used in North America for requesting emergency services. The E-911 system attempts to automatically associate a location with the origin of the call. An incoming E-911 call is answered at a Public Safety Answering Point (PSAP) of the governmental agency that has jurisdiction over the caller's location. When the call is taken at the PSAP, it is answered by a trained official who may dispatch one or more public safety response resources, such as fire trucks, police, or ambulances.

US 7,317,910 B2 generally relates to providing location information from a mobile user equipment, e.g. in case of an emergency call. A request for a connection is signaled between a user equipment and another party. The requested connection is then analyzed. Subsequent to detection that location information is required in association with the requested connection, a process for determining information about the location of the user equipment is activated. First information in association with the determining process is communicated on a control plane between the user equipment and the communication system, while second information in association with the determining process is communicated on a user plane between the user equipment and the communication system.

US 2005/0153706 A1 relates to method for establishing a media for communications in association with a location information service provided in association with a communication system is disclosed. In the method a user equipment is provided with information enabling the user equipment to communicate on a user plane connection with at least one location service entity when the user equipment is visiting a communication network other than a home network of the user equipment. This information may then be used for establishment of a user plane connection in the visited communication network between the user equipment and a location service entity.

WO 2007/016695 A2 relates to techniques to support emergency voice-over-Internet Protocol (VoIP) calls. The techniques may be used for various 3GPP and 3GPP2 networks, various location architectures, and various types of User Equipment (UE). A UE communicates with a visited network to send a request to establish an emergency VoIP call. The UE interacts with a location server instructed by the visited network to obtain a first position estimate for the UE. The UE performs call setup via the visited network to establish the emergency VoIP call with a PSAP, which may be selected based on the first position estimate. The UE may thereafter perform positioning with the location server to obtain an updated position estimate for the UE, e.g., if requested by the PSAP.

EP 2 469 894 A1 provides a method and system for implementing emergency location. The method includes that a UE initiates an emergency call, and starts a location procedure to a SUPL (Security User Plane Location) Location Platform (SLP); the SLP acquires the location information of the UE by the location procedure, and provides a Location Require Function (LRF) with the location information of the UE.

### SUMMARY

The invention is defined by the subject matter of the independent claims. Advantageous embodiments are subject to the dependent claims.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 is an illustration of an example configuration of a communication network architecture, according to an embodiment;
FIG. 2 is a block diagram illustrating data and control flow, according to an embodiment;
FIG. 3 is a flowchart illustrating a method for providing emergency mobile originated location reports from a user equipment (UE), according to an embodiment;
FIG. 4 is a block diagram illustrating a mobile device, upon which any one or more of the techniques (e.g., methodologies) discussed herein may be performed;
FIG. 5 illustrates a block diagram of an example machine upon which any one or more of the techniques (e.g., methodologies) discussed herein may be performed; and
FIG. 6 illustrates a functional block diagram of an example machine (e.g., a user equipment (UE)) in accordance with an embodiment.

### DETAILED DESCRIPTION

Locating the origin of an emergency caller depends on the device used to place the call. For a fixed-location device, such as a residential telephone, the caller's telephone number is identified and used to perform a lookup in a database to identify the corresponding street address. In the case of a mobile device, such as a cellular telephone, the wireless network operator may be queried by the PSAP in order to obtain the cellular telephone number and the location of the caller. The location may be indicated by the cell phone tower used by the caller (E-911 Phase 1) or by a latitude-longitude (E-911 Phase 2). The wireless network operator is required to provide such information within six minutes of the request from the PSAP.

A global navigation satellite system (GNSS) core embedded in a cellular device must support emergency call position reporting. The GNSS core may implement one of several location services, such as global positioning system (GPS), GLONASS (Globalnaya navigatsionnaya sputnikovay), BeiDou Navigation Satellite System (BDS), and Galileo. For example, upon calling an emergency call center, a network location server may trigger the cellular device to report its position. Such a mechanism may be referred to as a Network Initiated Location Request (NILR). An NILR process satisfies the cellular operator's regulative duty to provide the position of an emergency calling device. The expectation is that the device should report as soon as possible, which may compromise accuracy in favor of a faster response.

When the cellular device is camped on a cellular network, the network location server may trigger NILR over the cellular control plane (C-Plane). However, in cases where the connectivity between the cellular device and the network location server is done over Secure User Plane Location (SUPL) (e.g., secured Internet protocol (IP) socket-based protocol), it may be problematic to proactively trigger such a request by the network location server due to a lack of IP connectivity and discovery of the IP address of the cellular device. Such a lack of IP connectivity and discovery results in an inherent inability of an IP-based server to connect to an IP-based client. The problems with IP may extend to any IP-based server, including voice over IP (VOIP). Other situations may also arise where triggering an NILR may be delayed or impossible, for example, due to lack of a data connection.

The systems and methods described herein provide a mechanism for the GNSS core to better support emergency call location reporting under the SUPL protocol and for IP-based services. As a part of the mechanism, the cellular device is responsible for detecting the initiation of an emergency call and triggering the GNSS core to generate a location report. Upon receiving the trigger event, the GNSS core operates in the NILR mode of operation to generate and report the position report with the lowest time to first fix (TTFF).

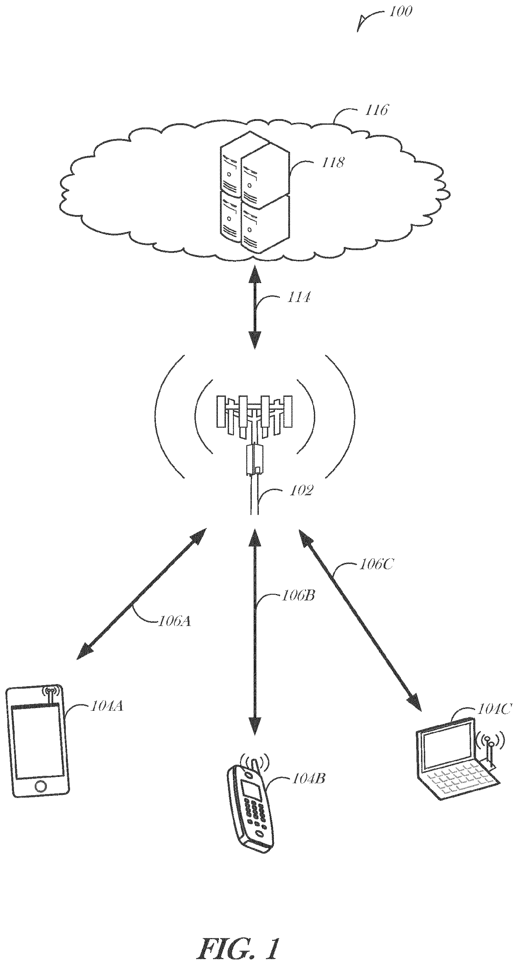

FIG. 1 is an illustration of an example configuration of a communication network architecture 100, according to an embodiment. Within the communication network architecture 100, a carrier-based network such as an IEEE 802.11 compatible wireless access point or a LTE/LTE-A cell network operating according to a standard from a 3GPP standards family is established by network equipment 102. The network equipment 102 may include a wireless access point, a Wi-Fi hotspot, or an enhanced or evolved node B (eNodeB) communicating with communication devices 104A, 104B, 104C (e.g., a user equipment (UE) or a communication station (STA)). The carrier-based network includes wireless network connections 106A, 106B, and 106C with the communication devices 104A, 104B, and 104C, respectively. The communication devices 104A, 104B, 104C are illustrated as conforming to a variety of form factors, including a smartphone, a mobile phone handset, and a personal computer having an integrated or external wireless network communication device.

The network equipment 102 is illustrated in FIG. 1 as being connected via a network connection 114 to network servers 118 in a cloud network 116. The network servers 118, or any one individual server, may operate to provide various types of information to, or receive information from, communication devices 104A, 104B, 104C, including device location, user profiles, user information, web sites, e-mail, and the like. In an embodiment, a location server is included in the network servers 118, where the location server is used in an emergency situation to execute a NILR process and request a location report from a communication device 104. The techniques described herein enable the determination of the location of the various communication devices 104A, 104B, 104C, with respect to the network equipment 102.

Communication devices 104A, 104B, 104C may communicate with the network equipment 102 when in range or otherwise in proximity for wireless communications. As illustrated, the connection 106A may be established between the mobile device 104A (e.g., a smartphone) and the network equipment 102; the connection 106B may be established between the mobile device 104B (e.g., a mobile phone) and the network equipment 102; and the connection 106C may be established between the mobile device 104C (e.g., a personal computer) and the network equipment 102.

The wireless communication connections 106A, 106B, 106C between devices 104A, 104B, 104C may utilize a Wi-Fi or IEEE 802.11 standard protocol, or a protocol such as the current 3rd Generation Partnership Project (3GPP) long term evolution (LTE) time division duplex (TDD)-Advanced systems. In an embodiment, the cloud network 116 and network equipment 102 comprise an evolved universal terrestrial radio access network (EUTRAN) using the 3rd Generation Partnership Project (3GPP) long term evolution (LTE) standard and operating in time division duplexing (TDD) mode. The communication devices 104A, 104B, 104C may include one or more antennas, receivers, transmitters, or transceivers that are configured to utilize a Wi-Fi or IEEE 802.11 standard protocol, or a protocol such as 3GPP, LTE, or TDD-Advanced or any combination of these or other communications standards.

Antennas in or on the communication devices 104A, 104B, 104C may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In such embodiments, each aperture may be considered a separate antenna. In some multiple-input multiple-output (MIMO) embodiments, antennas may be effectively separated to utilize spatial diversity and the different channel characteristics that may result between each of the antennas and the antennas of a transmitting station. In some MIMO embodiments, antennas may be separated by up to 1/10 of a wavelength or more.

In some embodiments, the communication device 104A may include one or more of a keyboard, a display, a non-volatile memory port, multiple antennas, a graphics processor, an application processor, speakers, and other mobile device elements. The display may be an LCD screen including a touch screen. The communication device 104B may be similar to communication device 104A, but does not need to be identical. The communication device 104C may include some or all of the features, components, or functionality described with respect to communication device 104A.

A base station, such as an enhanced or evolved node B (eNodeB), may provide wireless communication services to communication devices, such as communication device 104A. While the exemplary communication system 100 of FIG. 1 depicts only three communication devices 104A, 104B, 104C any combination of multiple users, devices, servers and the like may be coupled to network equipment 102 in various embodiments. For example, three or more users located in a venue, such as a building, campus, mall area, or other area, and may utilize any number of mobile wireless-enabled computing devices to independently communicate with network equipment 102. Similarly, the communication system 100 may include more than one network equipment 102. For example, a plurality of access points or base stations may form an overlapping coverage area where devices may communicate with at least two instances of network equipment 102.

Although communication system 100 is illustrated as having several separate functional elements, two or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions described herein. In some embodiments, the functional elements of system 100 may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, system 100 may include one or more processors and may be configured with instructions stored on a computer-readable storage device.

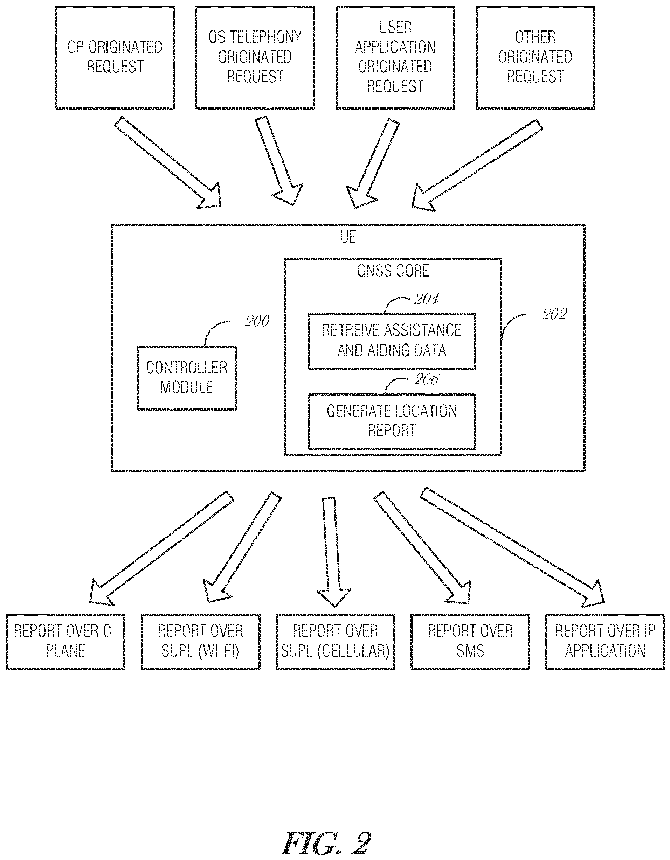

FIG. 2 is a block diagram illustrating data and control flow, according to an embodiment. Various components may identify an emergency call and trigger the generation of an emergency mobile originated location report (E-MOLR). As illustrated, components may include a cellular modem (e.g., cellular processor (CP)), an operating system (OS) telephone manager component (e.g., Android Telephony Manager), or a user application (e.g., VOIP application). In addition, the generations of the E-MOLR may be triggered by an OS location manager component (e.g., Android Location Manager) or by using the interface between the GNSS core and the cellular protocol stack. The controller module 200 may detect at the UE, an initiation of an emergency call and trigger, at the UE, the generation of a location report by the UE.

Upon receiving the triggering event, the GNSS core 202 attempts to retrieve assistance and aiding data (block 204) and generates the location report (block 206). GNSS core operation may include: 1) Stopping any other GNSS session and giving this request the highest priority; 2) Enabling the GNSS baseband for searching, acquiring and tracking GNSS satellites and providing GNSS measurement reports and satellites data block; 3) Retrieving A-GNSS assisted data from remote location server for lowest TTFF; 4) Retrieving Aiding data from the cellular modem for lowest TTFF; and 5) Generating and reporting location report. It is noted that assistance and aiding data is useful for both TTFF and for increased sensitivity. Also, it is understood that the GNSS core 202 may use other location data, such as Wi-Fi location data or near field communication (NFC) location data, to augment or assist the location determination when generating the location report.

When the location report is ready, GNSS core 202 may immediately push it to the remote location server. The report may use a position report message by any of the existing location related protocols, namely SUPL, RRLP (Radio Resource Location Services Protocol), RRC (Radio Resource Control), and LPP (LTE (Long Term Evolution) Positioning Protocol). In an embodiment, E-MOLR may be used as type of position report. Using E-MOLR may allow the server to better handle such report request.

Once the emergency location report is ready, the GNSS core may use various mechanisms to transmit the report to a remote location server (e.g., location server 118 of FIG. 1). Mechanism may include, but are not limited to a cellular C-Plane, SUPL over cellular U-Plane, SUPL over Wi-Fi, SMS, or any other IP connectivity based application. In an embodiment, the GNSS core may use all mechanisms available for pushing the report at the same time, including, but not limited to the following: 1) Cellular network C-Plane; 2) SUPL over cellular data service; 3) SUPL over Wi-Fi or any other available IP bearer; 4) SMS message; 5) IP message via OS module or user application. In this manner, the GNSS core increases the level of reliability of the report delivery.

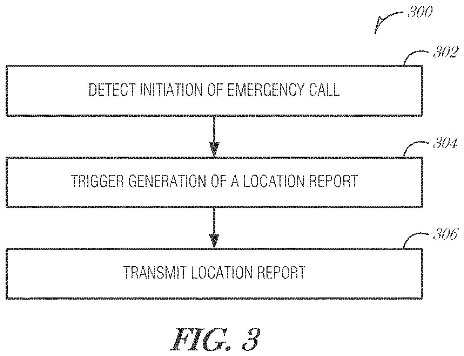

FIG. 3 is a flowchart illustrating a method 300 for providing emergency mobile originated location reports from a user equipment (UE), according to an embodiment. At block 302, an initiation of an emergency call is detected at the UE. In an embodiment, detecting the initiation of the emergency call comprises detecting the initiation of the emergency call at a cellular modem of the UE. In an embodiment, detecting the initiation of the emergency call comprises detecting the initiation of the emergency call at a user application executing at the UE. In an embodiment, detecting the initiation of the emergency call comprises detecting the initiation of the emergency call at an operating system module of the UE.

At block 304, the generation of a location report by the UE is triggered at the UE. In an embodiment, triggering the generation of the location report comprises generating and transmitting a request for the location report, internal to the UE, the request comporting to the format of a network initiated location request.

At block 306, the location report is transmitted from the UE to a remote location server.

In an embodiment, transmitting the location report comprises transmitting the location report over a cellular control plane.

In an embodiment, transmitting the location report comprises transmitting the location report using SUPL over a cellular user plane.

In an embodiment, transmitting the location report comprises transmitting the location report using SUPL over a wireless local area network (WLAN). In a further embodiment, the WLAN is in accordance with an IEEE 802.11 family of standards.

In an embodiment, transmitting the location report comprises transmitting the location report using simple messaging service (SMS).

In an embodiment, transmitting the location report comprises transmitting the location report over a plurality of communication channels selected from a cellular control plane, SUPL over a cellular user plane, using SUPL over a WLAN, or using SMS.

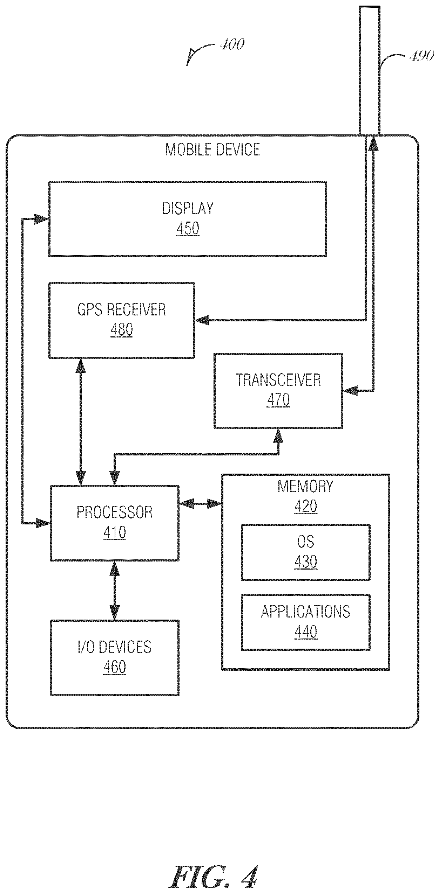

FIG. 4 is a block diagram illustrating a mobile device 400, upon which any one or more of the techniques (e.g., methodologies) discussed herein may be performed. The mobile device 400 may include a processor 410. The processor 410 may be any of a variety of different types of commercially available processors suitable for mobile devices, for example, an XScale architecture microprocessor, a Microprocessor without Interlocked Pipeline Stages (MIPS) architecture processor, or another type of processor. A memory 420, such as a Random Access Memory (RAM), a Flash memory, or other type of memory, is typically accessible to the processor 410. The memory 420 may be adapted to store an operating system (OS) 430 as well as application programs 440. The OS 430 or application programs 440 may include instructions stored on a computer readable medium (e.g., memory 420) that may cause the processor 410 of the mobile device 400 to perform any one or more of the techniques discussed herein. The processor 410 may be coupled, either directly or via appropriate intermediary hardware, to a display 450 and to one or more input/output (I/O) devices 460, such as a keypad, a touch panel sensor, a microphone, etc. Similarly, in an example embodiment, the processor 410 may be coupled to a transceiver 470 that interfaces with an antenna 490. The transceiver 470 may be configured to both transmit and receive cellular network signals, wireless data signals, or other types of signals via the antenna 490, depending on the nature of the mobile device 400. Further, in some configurations, a GPS receiver 480 may also make use of the antenna 490 to receive GPS signals.

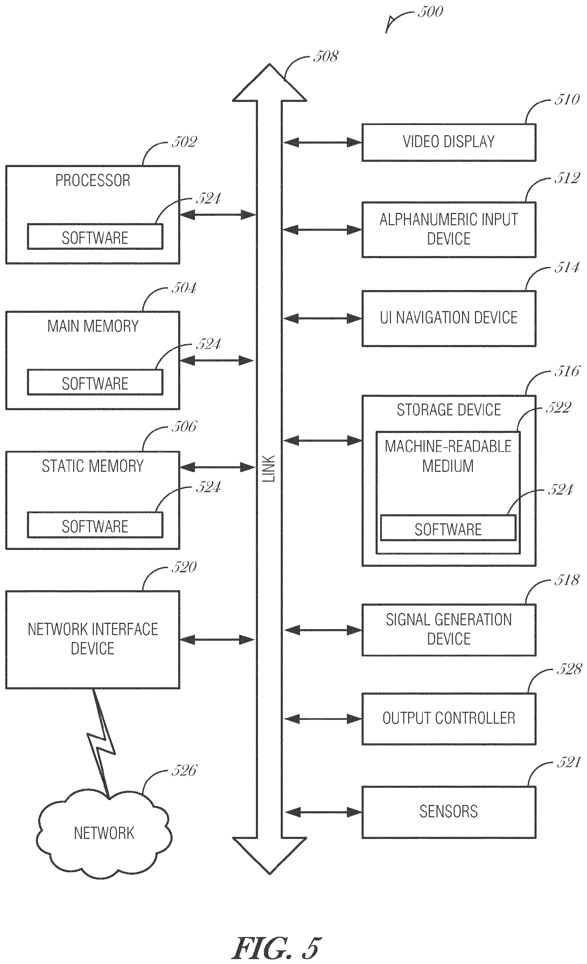

FIG. 5 illustrates a block diagram of an example machine 500 upon which any one or more of the techniques (e.g., methodologies) discussed herein may be performed. In alternative embodiments, the machine 500 may operate as a standalone device or may be connected (e.g., networked) to other machines. In a networked deployment, the machine 500 may operate in the capacity of a server machine, a client machine, or both in server-client network environments. In an example, the machine 500 may act as a peer machine in peer-to-peer (P2P) (or other distributed) network environment. The machine 500 may be a personal computer (PC), a tablet PC, a Personal Digital Assistant (PDA), a mobile telephone, a web appliance, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside (1) on a non-transitory machine-readable medium or (2) in a transmission signal. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 500 may include a hardware processor 502 (e.g., a processing unit, a graphics processing unit (GPU), a hardware processor core, or any combination thereof), a main memory 504, and a static memory 506, some or all of which may communicate with each other via a link 508 (e.g., a bus, link, interconnect, or the like). The machine 500 may further include a display device 510, an input device 512 (e.g., a keyboard), and a user interface (UI) navigation device 514 (e.g., a mouse). In an example, the display device 510, input device 512, and UI navigation device 514 may be a touch screen display. The machine 500 may additionally include a mass storage (e.g., drive unit) 516, a signal generation device 518 (e.g., a speaker), a network interface device 520, and one or more sensors 521, such as a global positioning system (GPS) sensor, camera, video recorder, compass, accelerometer, or other sensor. The machine 500 may include an output controller 528, such as a serial (e.g., universal serial bus (USB), parallel, or other wired or wireless (e.g., infrared (IR)) connection to communicate or control one or more peripheral devices (e.g., a printer, card reader, etc.).

The mass storage 516 may include a machine-readable medium 522 on which is stored one or more sets of data structures or instructions 524 (e.g., software) embodying or utilized by any one or more of the techniques or functions described herein. The instructions 524 may also reside, completely or at least partially, within the main memory 504, within static memory 506, or within the hardware processor 502 during execution thereof by the machine 500. In an example, one or any combination of the hardware processor 502, the main memory 504, the static memory 506, or the mass storage 516 may constitute machine-readable media.

While the machine-readable medium 522 is illustrated as a single medium, the term "machine readable medium" may include a single medium or multiple media (e.g., a centralized or distributed database, and/or associated caches and servers) that configured to store the one or more instructions 524.

The term "machine-readable medium" may include any tangible medium that is capable of storing, encoding, or carrying instructions for execution by the machine 500 and that cause the machine 500 to perform any one or more of the techniques of the present disclosure, or that is capable of storing, encoding or carrying data structures used by or associated with such instructions. Non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 524 may further be transmitted or received over a communications network 526 using a transmission medium via the network interface device 520 utilizing any one of a number of transfer protocols (e.g., frame relay, internet protocol (IP), transmission control protocol (TCP), user datagram protocol (UDP), hypertext transfer protocol (HTTP), etc.). The term "transmission medium" shall be taken to include any intangible medium that is capable of storing, encoding or carrying instructions for execution by the machine 500, and includes digital or analog communications signals or other intangible medium to facilitate communication of such software.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

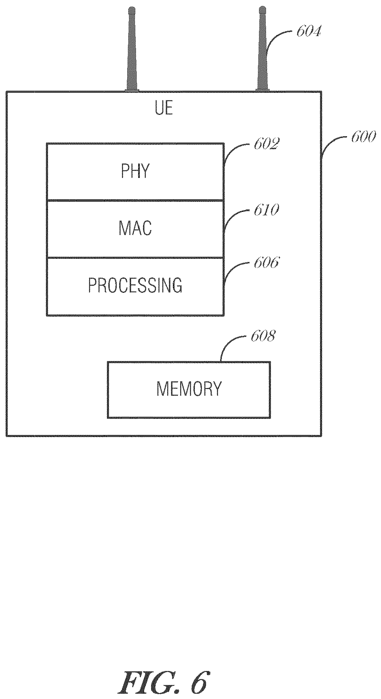

FIG. 6 illustrates a functional block diagram of an example machine 600 (e.g., a user equipment (UE)) in accordance with an embodiment. The UE 600 may include physical layer circuitry 602 for transmitting and receiving signals to and from eNBs using one or more antennas 604. UE 600 may also include processing circuitry 606 that may include, among other things a channel estimator. UE 600 may also include a memory 608. The processing circuitry may be configured to determine several different feedback values discussed below for transmission to the eNB. The processing circuitry may also include a media access control (MAC) layer 610.

In some embodiments, the UE 600 may include one or more of a keyboard, a display, a non-volatile memory port, multiple antennas, a graphics processor, an application processor, speakers, and other mobile device elements. The display may be an LCD screen including a touch screen.

The one or more antennas 604 utilized by the UE 600 may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated to take advantage of spatial diversity and the different channel characteristics that may result between each of antennas and the antennas of a transmitting station. In some MIMO embodiments, the antennas may be separated by up to 1/10 of a wavelength or more.

Although the UE 600 is illustrated as having several separate functional elements, two or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage medium, which may be read and executed by at least one processor to perform the operations described herein. A computer-readable storage medium may include any non-transitory mechanism for storing information in a form readable by a machine (e.g., a computer). For example, a computer-readable storage medium may include read-only memory (ROM), random-access memory (RAM), magnetic disk storage media, optical storage media, flash-memory devices, and other storage devices and media. In these embodiments, one or more processors of the UE 600 may be configured with the instructions to perform the operations described herein.

In some embodiments, the UE 600 may be configured to receive OFDM communication signals over a multicarrier communication channel in accordance with an OFDMA communication technique. The OFDM signals may comprise a plurality of orthogonal subcarriers. In some broadband multicarrier embodiments, eNBs (including macro eNB and pico eNBs) may be part of a broadband wireless access (BWA) network communication network, such as a Worldwide Interoperability for Microwave Access (WiMAX) communication network or a 3rd Generation Partnership Project (3GPP) Universal Terrestrial Radio Access Network (UTRAN) Long-Term-Evolution (LTE) or a Long-Term-Evolution (LTE) communication network, although the scope of the inventive subject matter described herein is not limited in this respect. In these broadband multicarrier embodiments, the UE 600 and the eNBs may be configured to communicate in accordance with an orthogonal frequency division multiple access (OFDMA) technique. The UTRAN LTE standards include the 3rd Generation Partnership Project (3GPP) standards for UTRAN-LTE, release 8, March 2008, and release 10, December 2010, including variations and evolutions thereof.

In some LTE embodiments, the basic unit of the wireless resource is the Physical Resource Block (PRB). The PRB may comprise 12 sub-carriers in the frequency domain x 0.5 ms in the time domain. The PRBs may be allocated in pairs (in the time domain). In these embodiments, the PRB may comprise a plurality of resource elements (REs). A RE may comprise one subcarrier x one symbol.

Two types of reference signals may be transmitted by an eNB including demodulation reference signals (DM-RS), channel state information reference signals (CIS-RS) and/or a common reference signal (CRS). The DM-RS may be used by the UE for data demodulation. The reference signals may be transmitted in predetermined PRBs.

In some embodiments, the OFDMA technique may be either a frequency domain duplexing (FDD) technique that uses different uplink and downlink spectrum or a time-domain duplexing (TDD) technique that uses the same spectrum for uplink and downlink.

In some other embodiments, the UE 600 and the eNBs may be configured to communicate signals that were transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, the UE 600 may be part of a portable wireless communication device, such as a PDA, a laptop or portable computer with wireless communication capability, a web tablet, a wireless telephone, a wireless headset, a pager, an instant messaging device, a digital camera, an access point, a television, a medical device (e.g., a heart rate monitor, a blood pressure monitor, etc.), or other device that may receive and/or transmit information wirelessly.

In some LTE embodiments, the UE 600 may calculate several different feedback values which may be used to perform channel adaption for closed-loop spatial multiplexing transmission mode. These feedback values may include a channel-quality indicator (CQI), a rank indicator (RI) and a precoding matrix indicator (PMI). By the CQI, the transmitter selects one of several modulation alphabets and code rate combinations. The RI informs the transmitter about the number of useful transmission layers for the current MIMO channel, and the PMI indicates the codebook index of the precoding matrix (depending on the number of transmit antennas) that is applied at the transmitter. The code rate used by the eNB may be based on the CQI. The PMI may be a vector that is calculated by the UE and reported to the eNB. In some embodiments, the UE may transmit a physical uplink control channel (PUCCH) of format 2, 2a or 2b containing the CQI/PMI or RI.

In these embodiments, the CQI may be an indication of the downlink mobile radio channel quality as experienced by the UE 600. The CQI allows the UE 600 to propose to an eNB an optimum modulation scheme and coding rate to use for a given radio link quality so that the resulting transport block error rate would not exceed a certain value, such as 10%. In some embodiments, the UE may report a wideband CQI value which refers to the channel quality of the system bandwidth. The UE may also report a sub-band CQI value per sub-band of a certain number of resource blocks which may be configured by higher layers. The full set of sub-bands may cover the system bandwidth. In case of spatial multiplexing, a CQI per code word may be reported.

In some embodiments, the PMI may indicate an optimum precoding matrix to be used by the eNB for a given radio condition. The PMI value refers to the codebook table. The network configures the number of resource blocks that are represented by a PMI report. In some embodiments, to cover the system bandwidth, multiple PMI reports may be provided. PMI reports may also be provided for closed loop spatial multiplexing, multi-user MIMO and closed-loop rank 1 precoding MIMO modes.

In some cooperating multipoint (CoMP) embodiments, the network may be configured for joint transmissions to a UE in which two or more cooperating/coordinating points, such as remote-radio heads (RRHs) transmit jointly. In these embodiments, the joint transmissions may be MIMO transmissions and the cooperating points are configured to perform joint beamforming.

The example embodiments discussed herein may be utilized by wireless network access providers of all types including, but not limited to, mobile broadband providers looking to increase cellular offload ratios for cost-avoidance and performance gains, fixed broadband providers looking to extend their coverage footprint outside of customers' homes or businesses, wireless network access providers looking to monetize access networks via access consumers or venue owners, public venues looking to provide wireless network (e.g., Internet) access, or digital services (e.g. location services, advertisements, entertainment, etc.) over a wireless network, and business, educational or non-profit enterprises that desire to simplify guest Internet access or Bring-Your-Own-Device (BYOD) access.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.
The above description is intended to be illustrative, and not restrictive. For example, the above-described examples (or one or more aspects thereof) may be used in combination with others. Other embodiments may be used, such as by one of ordinary skill in the art upon reviewing the above description

## Claims

1. A method for providing emergency mobile originated location reports from a user equipment (104A, 104B, 104C, 400), UE, the method comprising:
detecting (302) at the UE (104A, 104B, 104C, 400), an initiation of an emergency call;
triggering (304), at the UE (104A, 104B, 104C, 400), the generation of a location report by the UE (104A, 104B, 104C, 400);
generating and transmitting, internal to the UE (104A, 104B, 104C, 400), a request for the location report; and
transmitting (306) the location report from the UE (104A, 104B, 104C, 400) to a remote location server using Secure User Plane Location, SUPL; wherein the UE (104A, 104B, 104C, 400) is camped on a cellular network when detecting the initiation of the emergency call; and
the request comports with the format of a network initiated location request, NILR.

2. The method of claim 1, wherein detecting the initiation of the emergency call comprises detecting the initiation of the emergency call at a cellular modem of the UE (104A, 104B, 104C, 400).

3. The method of claim 1, wherein detecting the initiation of the emergency call comprises detecting the initiation of the emergency call at a user application executing at the UE (104A, 104B, 104C, 400).

4. The method of claim 1, wherein detecting the initiation of the emergency call comprises detecting the initiation of the emergency call at an operating system module of the UE (104A, 104B, 104C, 400).

5. The method of claim 1, wherein transmitting the location report comprises transmitting the location report over a cellular user plane.

6. The method of claim 1, wherein transmitting the location report comprises transmitting the location report over a wireless local area network.

7. The method of claim 6, wherein the wireless local area network is in accordance with an IEEE 802.11 family of standards.

8. A machine-readable medium including instructions, which when executed by a machine, cause the machine to perform operations of any of the methods of claims 1-7.

9. A user equipment (104A, 104B, 104C, 400), UE, for providing emergency mobile originated location reports, comprising:
a controller module (200) adapted to detect, an initiation of an emergency call, and to generate and transmit a request for the location report to a global navigation satellite system core (202); and
the global navigation satellite system core (202) adapted to generate (206) and transmit the location report to a remote location server using Secure User Plane Location, SUPL; and
wherein the UE (104A, 104B, 104C, 400) is camped on a cellular network when detecting the initiation of the emergency call; and
the request comports with the format of a network initiated location request, NILR.

## Patentansprüche

1. Verfahren zum Bereitstellen von vom Mobilgerät ausgehenden Notfall-Standortberichten von einer Benutzerausrüstung (104A, 104B, 104C, 400), "UE", das Verfahren umfassend:
Erfassen (302), an der UE (104A, 104B, 104C, 400), einer Initiierung eines Notrufs;
Auslösen (304), an der UE (104A, 104B, 104C, 400), der Erzeugung eines Standortberichts durch die UE (104A, 104B, 104C, 400);
Erzeugen und Übertragen, innerhalb der UE (104A, 104B, 104C, 400), einer Anforderung des Standortberichts; und
Übertragen (306) des Standortberichts von der UE (104A, 104B, 104C, 400) an einen Server an einem entfernten Standort unter Verwendung von Secure User Plane Location, SUPL;
wobei
die UE (104A, 104B, 104C, 400) auf einem Mobilfunknetz eingerichtet ist, wenn die Initiierung des Notrufs erfasst wird; und
die Anforderung mit dem Format einer Network Initiated Location Request, NILR, übereinstimmt.

2. Verfahren nach Anspruch 1, wobei das Erfassen der Initiierung des Notrufs ein Erfassen der Initiierung des Notrufs an einem Mobilfunkmodem der UE (104A, 104B, 104C, 400) umfasst.

3. Verfahren nach Anspruch 1, wobei das Erfassen der Initiierung des Notrufs ein Erfassen der Initiierung des Notrufs an einer Benutzeranwendung, die an der UE (104A, 104B, 104C, 400) ausgeführt wird, umfasst.

4. Verfahren nach Anspruch 1, wobei das Erfassen der Initiierung des Notrufs ein Erfassen der Initiierung des Notrufs an einem Betriebssystemmodul der UE (104A, 104B, 104C, 400) umfasst.

5. Verfahren nach Anspruch 1, wobei das Übertragen des Standortberichts ein Übertragen des Standortberichts über eine Mobilfunkbenutzerebene umfasst.

6. Verfahren nach Anspruch 1, wobei das Übertragen des Standortberichts ein Übertragen des Standortberichts über ein drahtloses lokales Netzwerk umfasst.

7. Verfahren nach Anspruch 6, wobei das drahtlose lokale Netzwerk mit einer IEEE 802.11-Standardfamilie übereinstimmt.

8. Maschinenlesbares Medium, einschließlich Befehlen, die bei Ausführung durch eine Maschine bewirken, dass die Maschine Operationen nach einem der Verfahren der Ansprüche 1-7 durchführt.

9. Benutzerausrüstung (104A, 104B, 104C, 400), UE, zum Bereitstellen von vom Mobilgerät ausgehenden Notfall-Standortberichten, umfassend:
ein Controller-Modul (200), das konzipiert ist, um eine Initiierung eines Notrufs zu erfassen und eine Anforderung des Standortberichts zu erzeugen und zu einem Kern eines globalen Navigationssatellitensystems (202) zu übertragen; und
den Kern eines globalen Navigationssatellitensystems (202), der konzipiert ist, um den Standortbericht zu erzeugen (206) und unter Verwendung von Secure User Plane Location, SUPL, an einen Server an einem entfernten Standort zu übertragen; und
wobei
die UE (104A, 104B, 104C, 400) auf einem Mobilfunknetz eingerichtet ist, wenn die Initiierung des Notrufs erfasst wird; und
die Anforderung mit dem Format einer Network Initiated Location Request, NILR, übereinstimmt.

## Revendications

1. Procédé de fourniture de rapports de localisation d'urgence au départ du mobile à partir d'un équipement utilisateur (104A, 104B, 104C, 400), UE, le procédé comprenant :
la détection (302), au niveau de l'UE (104A, 104B, 104C, 400), d'un lancement d'un appel d'urgence ;
le déclenchement (304), au niveau de l'UE (104A, 104B, 104C, 400), de la génération d'un rapport de localisation par l'UE (104A, 104B, 104C, 400) ;
la génération et la transmission, en interne à l'UE (104A, 104B, 104C, 400), d'une requête du rapport de localisation ; et
la transmission (306) du rapport de localisation depuis l'UE (104A, 104B, 104C, 400) vers un serveur de localisation distant au moyen du protocole de localisation de plan utilisateur sécurisée, SUPL ;
l'UE (104A, 104B, 104C, 400) campant sur un réseau cellulaire au moment de la détection du lancement de l'appel d'urgence ; et
la requête étant conforme au format d'une requête de localisation lancée par le réseau, NILR.

2. Procédé selon la revendication 1, dans lequel la détection du lancement de l'appel d'urgence comprend la détection du lancement de l'appel d'urgence au niveau d'un modem cellulaire de l'UE (104A, 104B, 104C, 400) .

3. Procédé selon la revendication 1, dans lequel la détection du lancement de l'appel d'urgence comprend la détection du lancement de l'appel d'urgence au niveau d'une application utilisateur s'exécutant au niveau de l'UE (104A, 104B, 104C, 400).

4. Procédé selon la revendication 1, dans lequel la détection du lancement de l'appel d'urgence comprend la détection du lancement de l'appel d'urgence au niveau d'un module de système d'exploitation de l'UE (104A, 104B, 104C, 400).

5. Procédé selon la revendication 1, dans lequel la transmission du rapport de localisation comprend la transmission du rapport de localisation par le biais d'un plan utilisateur cellulaire.

6. Procédé selon la revendication 1, dans lequel la transmission du rapport de localisation comprend la transmission du rapport de localisation par le biais d'un réseau local sans fil.

7. Procédé selon la revendication 6, dans lequel le réseau local sans fil est en conformité avec une famille IEEE 802.11 de normes.

8. Support lisible par machine, comportant des instructions dont l'exécution par une machine amène la machine à réaliser des opérations de l'un quelconque des procédés selon les revendications 1 à 7.

9. Équipement utilisateur (104A, 104B, 104C, 400), UE, permettant de fournir des rapports de localisation d'urgence au départ du mobile, comprenant :
un module contrôleur (200) adapté à détecter un lancement d'un appel d'urgence, et à générer et transmettre une requête du rapport de localisation vers un cœur (202) de système mondial de satellites de navigation ; et
le cœur (202) de système mondial de satellites de navigation adapté à générer (206) et transmettre le rapport de localisation vers un serveur de localisation distant au moyen du protocole de localisation de plan utilisateur sécurisée, SUPL ; et
l'UE (104A, 104B, 104C, 400) campant sur un réseau cellulaire au moment de la détection du lancement de l'appel d'urgence ; et
la requête étant conforme au format d'une requête de localisation lancée par le réseau, NILR.
